# EUROPÄISCHE PATENTSCHRIFT

(11) **EP 1 721 214 B1**
(45) Veröffentlichungstag und Bekanntmachung des Hinweises auf die Patenterteilung: **14.12.2011**
(21) Anmeldenummer: 05715012.0
(22) Anmeldetag: 17.02.2005
(51) Int. Cl.: G03B 17/14, G03B 19/18

(54) **VORRICHTUNG ZUM VERBINDEN EINES KAMERAOBJEKTIVS MIT EINER LAUFBILDKAMERA**
DEVICE FOR CONNECTING A CAMERA LENS TO A FILM CAMERA
DISPOSITIF POUR RELIER UN OBJECTIF UNE CAM RA

(30) Priorität: 25.02.2004 DE 102004009856
(43) Veröffentlichungstag der Anmeldung: 15.11.2006
(73) Patentinhaber: ARNOLD & RICHTER CINE TECHNIK GMBH & CO. BETRIEBS KG, 80799 München (DE)
(72) Erfinder: HAUBMANN, Michael B., A-1130 Wien (AT)
(74) Vertreter: Ninnemann, Detlef
(86) Internationale Anmeldenummer: PCT/DE2005/000306
(87) Internationale Veröffentlichungsnummer: WO 2005/083506

(56) Entgegenhaltungen:
- EP-A- 0 574 105
- DE-A1- 19 914 208
- US-A- 4 104 649
- US-A- 4 104 649
- US-A- 4 536 071
- US-A- 4 536 071
- US-A- 4 682 871
- US-A- 4 963 910

## Beschreibung

Die Erfindung bezieht sich auf eine Vorrichtung zum Verbinden eines Kameraobjektivs mit einer Laufbildkamera gemäß dem Oberbegriff des Anspruch 1.

Aus der EP 0 942 305 A1 ist ein Steuerungssystem für ein Kameraobjektiv bekannt, das mittels seiner Objektivbefestigung an einer Objektivaufnahme einer Laufbildkamera befestigt wird. Das Steuerungssystem enthält mehrere Antriebseinheiten zur automatischen Einstellung von Sollpositionen von drei Objektivringen, über die die Bildschärfe (Focus), die Blendenöffnung der Iris-Blende und die Brennweite (Zoom) des Kameraobjektivs einstellbar sind. Die Objektivringe sind mit einer Vorrichtung zur Ermittlung des Ist-Zustandes der Objektivringpositionen versehen, die die tatsächliche Position der Objektivringe relativ zum Kameraobjektiv ermittelt, in Messausgangssignale umwandelt und insbesondere berührungslos als optoelektronischer Winkelaufnehmer mit einer mit dem jeweiligen Objektivring drehfest verbundenen Codierscheibe mit mehreren Codierspuren und beidseitig der Codierscheibe angeordneten Lichtsender und Lichtempfänger oder als magnetoresistiver Magnetsensor ausgebildet und in das Kameraobjektiv integriert ist.

Aus der Firmendruckschrift "ARRIFLEX 435 ADVANCED" der Firma Arnold & Richter Cinetechnik ist es bekannt, die ermittelten Ist-Zustände der Objektivringpositionen über eine standardisierte elektrische Schnittstelle mit einer standardisierten Objektivbefestigung und einer standardisierten Objektivaufnahme (PL-mount) zur Laufbildkamera zu übertragen.

Zur Verarbeitung des erfassten Ist-Zustandes der Objektivringpositionen und damit der am Kameraobjektiv eingestellten Werte für den Focus, die Iriseinstellung und den Zoom sowie zur Eingabe von Sollwerten und Abgabe von Steuerbefehlen an die mit den Objektivringen koppelbaren Antriebseinheiten ist aus der EP 0 574 105 A1 ein modulares Steuersystem für eine Laufbildkamera bekannt, bei dem in jeder Antriebseinheit ein Steuer- und Regelteil mit einem Positionsgeber integriert und über einen digitalen Dateneingang und Datenausgang sowie einen seriellen Steuer- und Datenbus mit einer Handbedieneinheit verbunden ist, die ein Speichermodul zur Aufzeichnung von Einstellwerten für vorgebbare Kamera- und Objektivfunktionen wie Aufnahmefrequenz, Brennweite, Entfernung, Blende, Bereichsgrenzen und Skalierung sowie Verstellverläufen der Frequenz-, Zoom-, Focus- und/oder Iris-Einstellungen aufweist, in das Einstellwerte oder Verstellverläufe eingelesen und für einen Wiedergabeablauf oder zur Wiederherstellung vorgemerkter Einstellungen ausgelesen werden kann.

Anstelle eines seriellen Steuer- und Datenbus zur Verbindung der mit den Objektivringen gekoppelten Antriebseinheiten und Positionssensoren mit den Handbedieneinheiten zur Sollwerteingabe kann gemäß der EP 0 910 814 B1 eine kameraseitige Steuer- und Datenerfassungseinheit, die mit mehreren die Kamera- und/oder Aufnahmefunktionen steuernden und erfassenden Einrichtungen elektrisch verbunden ist, über eine bidirektionale Funk-Sende-Empfangseinheit mit bedienerseitigen Kontrolleinheiten zur Eingabe von Steuerdaten und Übermittlung von Steuersignalen zur Steuerung der Kamera- und/oder Aufnahmefunktionen und damit auch zur Einstellung eines Kameraobjektivs verbunden werden.

Da die Anwendung des aus der EP 0 942 305 A1 bekannten Steuerungssystems für ein Kameraobjektiv einer Laufbildkamera ein Kameraobjektiv mit integriertem Datenspeicher und Positionssensoren zur Erfassung der Ist-Zustände der Zoom-, Focus- und Iriseinstellungen des Kameraobjektivs und eine entsprechende Auswertung der Ist-Zustände und eine standardisierte elektrische Schnittstelle mit einer standardisierten Objektivbefestigung und einer standardisierten Objektivaufnahme (PL-Mount) der Laufbildkamera erfordert, können Kameraobjektive ohne diese in das Kameraobjektiv integrierten Positionssensoren und Datenspeicher nicht in vollem Umfange für das Steuerungssystem verwendet werden, so dass deren Anwendung auf Steuerungssysteme beschränkt bleibt wie sie aus der EP 0 574 105 A1 bzw. EP 0 910 814 B1 bekannt sind, bei denen die Istwerte der Objektiveinstellungen über die an die Objektivringe des Kameraobjektivs anschwenkbaren und Positionssensoren enthaltenden Antriebseinheiten erfasst und in den Steuer- und Regeleinheiten zusammen mit den vorgegebenen Sollwerten verarbeitet werden.

Aus der DE 199 14 208 A1 ist es bekannt, an einem Objektivträger, der mit einem Stativ verbunden ist, einerseits eine TV-Kamera und andererseits über einen Schwingungsübertragungs-Isolator ein Objektiv anzubringen, das eine Ausgabeeinrichtung für die Brennweiten- und Zoom-Einstellung des Objektivs enthält, die Signale an eine CPU des Schwingungsübertragungs-Isolators abgibt und einen ROM zur Speicherung der Objektivinformationen enthält, aus denen die CPU die Informationen zur Steuerung einer in den Schwingungsübertragungs-Isolator zur Korrektur der Bildverschwommenheit eingebauten Korrekturlinse in einer Ebene senkrecht zur optischen Achse ausliest.

Der Schwingungsübertragungs-Isolator enthält ein Informations-Eingangssteuerteil zum Vorgeben von Objektivinformationen nach Maßgabe der Bedienungsweise eines Anwenders für den Fall, dass die Objektiveinrichtung keine Einrichtung zur Übertragung der Objektivinformationen hat, so dass der Anwender die Objektivinformationen über das Informations-Eingabesteuerteil frei eingeben oder ändern kann. Hierfür weist das Objektiv eine Ausgabeeinrichtung für die Brennweite und die Zoom-Einstellung auf, die zur CPU des Schwingungsübertragungs-Isolators übertragen werden. Die Informationen werden in einem Objektiv-Informationsspeicher gespeichert und mittels der CPU ausgelesen, die die erforderliche Steuerung einer Korrekturlinse des Schwingungsübertragungs-Isolators vornimmt, die zur Korrektur der Bildverschwommenheit in einer Ebene senkrecht zur optischen Achse verstellbar ist. Diese Informationen können unter Einsatz eines Objektiv-Informationsstellschalters manuell durch den Benutzer aktualisiert werden. Dabei erhält die CPU des Schwingungsübertragungs-Isolators nur die Brennweiten und Zoom-Signale des Objektivs, die für die Steuerung der Schwingungsübertragungs-Isolierung erforderlich sind. Weitere Signale gehen durch den Schwingungsübertragungs-Isolator hindurch.

Das bekannte Steuerungssystem zur Bearbeitung von Objektivinformationen setzt voraus, dass die Objektivinformationen entweder manuell am Schwingungsübertragungs-Isolator eingegeben oder vom Objektiv bereitgestellt und über den Schwingungsübertragungs-Isolator zur Kamera übertragen werden, so dass diese entsprechende Einstellungen in entgegen gesetzter Signalrichtung am Objektiv vornehmen kann.

Aus der US-A-4682 871 ist eine Kamera mit einer Objektivbefestigung bekannt, an der ein auswechselbares Kameraobjektiv befestigt wird, das einen Speicher enthält, in dem Objektivinformationen gespeichert sind, die einen nominellen Blendenwert des Objektivs und einen objektiven, sich mit einer Bildvergrößerung verändernden Blendenwert umfassen. Die Objektivinformationen werden über die zueinander ausgerichteten Kontakte einer Informations-Ausgabeeinrichtung des Objektivs und die Objektivbefestigung zu einer CPU der Kamera übertragen, die die Objektivinformationen zur Fokussierung des auswechselbaren Objektivs verarbeitet.

Aus der US-A-4 963 910 ist es bekannt, ein Zwischenzubehör wie einen Faltenbalg, ein Verlängerungsrohr oder einen Konverter, zwischen dem Kameragehäuse und einem Wechselobjektiv anzuordnen. Das Zwischenzubehör enthält einen Datenspeicher zur Speicherung von Daten des Zwischenzubehörs, einen Addierer zum Addieren der das Zwischenzubehör repräsentierenden Daten mit den Daten des Wechselobjektivs, die vom Wechselobjektiv über die Verbindung des Wechselobjektivs mit dem Zwischenzubehör abgegeben werden, sowie eine Datenausgabe zur Abgabe der mittels des Addierers aufaddierten Daten über das Kameragehäuse an die Kameraelektronik.

Aus der US 4,536,071 A ist eine Objektivbefestigung für eine fotografische Kamera mit einer automatischen Blendensteuerung und automatischen Scharfeinstellung bekannt, die elektrische Kontakte für die Übertragung elektrischer Signale zwischen der fotografischen Kamera und einem Wechselobjektiv aufweist. Die Objektivbefestigung enthält einen Datenspeicher und ist mittels Schrauben an dem Wechselobjektiv befestigbar.

Aus der US 4,104,649 A ist ein Adapter zum Verbinden eines Wechselobjektivs mit einer Digitalkamera bekannt, der mit dem Wechselobjektiv verbunden wird und Informationen in Form kodierter digitaler Signale an die Digitalkamera abgibt. Der Adapter enthält mehrere Öffnungen und in den Öffnungen fixierte digitale Signalstifte und wird mittels zweier Schrauben mit dem Wechselobjektiv verbunden. Wird die Objektivbefestigung des Wechselobjektivs mit dem daran angebrachten Adapter an der Digitalkamera befestigt, so werden die Signalstifte mit entsprechenden Schaltelementen einer Schaltvorrichtung der Digitalkamera in Eingriff gebracht.

Aufgabe der vorliegenden Erfindung ist es, eine Vorrichtung zum Verbinden eines Kameraobjektivs mit einer Laufbildkamera anzugeben, die den Einsatz von Kameraobjektiven ohne Datenspeicher und elektrischer Schnittstelle in ein Steuerungssystem einer Laufbildkamera mit automatischer Einstellung von Einstellwerten eines Kameraobjektivs ermöglicht.

Diese Aufgabe wird erfindungsgemäß durch die Merkmale des Anspruchs 1 gelöst.

Die erfindungsgemäße Lösung ermöglicht es, auch Kameraobjektive ohne integrierte Datenspeicher und elektrische Schnittstelle in ein Steuerungssystem zur automatischen Einstellung von Einstellwerten eines Kameraobjektivs einer Laufbildkamera einzusetzen.

Der erfindungsgemäßen Lösung liegt die Überlegung zugrunde, Kameraobjektive ohne Datenspeicher und elektrischer Schnittstelle in ein Steuerungssystem für ein mit einer Laufbildkamera verbundenes Kameraobjektiv einsetzen zu können, das die optikbezogenen Daten des Kameraobjektivs wie Objektivtyp, Seriennummer, Umrechnungstabellen und dergleichen aus dem Datenspeicher eines Zwischenflanschs bezieht, der einerseits mit dem Kameraobjektiv und andererseits mit der Objektivaufnahme der Laufbildkamera verbunden wird und einen Kontaktbereich aufweist, der auf den in der Objektivaufnahme der Laufbildkamera angeordneten Kontaktbereich zum Auslesen der optikbezogenen Daten des Kameraobjektivs durch das in die Laufbildkamera integrierte oder externe Steuerungssystem für Kameraobjektive ausgerichtet ist.

Damit ist eine auf das jeweilige Kameraobjektiv individuell abgestimmte Steuerung beispielsweise der Tiefenschärfe durch das in die Laufbildkamera integrierte oder externe Steuerungssystem für Kameraobjektive möglich, ohne dass das Kameraobjektiv einen entsprechenden Speicher für optikbezogene Daten des Kameraobjektivs aufweist. Grundsätzlich könnten diese optikbezogenen Daten auch über einen beispielsweise als Strichcode auf einem Objektivdeckel vorgesehenen Datensatz bezogen und im Steuerungssystem verarbeitet werden, jedoch würde eine derartige Lösung die Verwendung zusätzlicher Lesegeräte erforderlich machen, die mit dem Steuerungssystem für das Kameraobjektiv zu verbinden wären. Neben einer umständlichen Handhabung besteht zudem die Gefahr, dass der den Datensatz enthaltende Objektivdeckel verloren gehen oder versehentlich mit dem Objektivdeckel eines anderen Kameraobjektivs vertauscht werden könnte.

In bevorzugter Ausführungsform weist der Zwischenflansch einen Bajonettring mit Bajonettstegen zur Verbindung mit der Objektivaufnahme der Laufbildkamera auf und kann auf die Objektivbefestigung des Kameraobjektivs aufgesteckt und mit dieser verbunden werden.

Vorzugsweise ist der Datenspeicher des Zwischenflanschs Teil einer miniaturisierten Elektronik mit Datenspeicher und einem an der Datenschnittstelle angeordneten Kontaktbereich, der auf den in der Objektivaufnahme der Laufbildkamera angeordneten Kontaktbereich zum Auslesen der optikbezogenen Daten des Kameraobjektivs durch das in die Laufbildkamera integrierte oder externe Steuerungssystem für Kameraobjektive ausgerichtet ist.

Die Integration des Datenspeichers in eine miniaturisierte Elektronik ermöglicht es, die Einrichtung zur Speicherung von Daten des Kameraobjektivs problemlos in eine entsprechend modifizierte Objektivbefestigung zu integrieren, so dass dieses an eine als PL-Mount ausgebildete Objektivaufnahme einer Laufbildkamera angebaut werden kann.

Die miniaturisierte Elektronik mit Datenspeicher und elektrischer Schnittstelle kann als Schaltkreisfolie ausgebildet werden, die auf der Objektivbefestigung des Kameraobjektivs so angebracht wird, dass der an der standardisierten elektrischen Schnittstelle angeordnete Kontaktbereich der miniaturisierten Elektronik auf den in der Objektivaufnahme der Laufbildkamera angeordneten Kontaktbereich ausgerichtet ist.

Zusätzlich zur Speicherung der optikbezogenen Daten des Kameraobjektivs und einer entsprechend ausgebildeten standardisierten elektrischen Schnittstelle kann die miniaturisierte Elektronik eine eigene Stromversorgungseinrichtung oder Einrichtung zur Spannungspufferung enthalten.

Da das mit einer standardisierten Objektivbefestigung zur Speicherung von Daten des Kameraobjektivs versehene Kameraobjektiv keine integrierten Positionssensoren aufweist, können in einer weiterführenden Ausgestaltung der erfindungsgemäßen Lösung zur vollständigen Integration derart nachgerüsteter Kameraobjektive mit den Objektivringen des Kameraobjektivs verbindbare Positionssensoren zur Erfassung von Einstellwerten des Kameraobjektivs für Zoom, Focus und/oder Iris und Abgabe von Positionssignalen an das Steuersystem für Kameraobjektive vorgesehen werden.

Neben reinen Positionssensoren ist auch die Anordnung von mit den Objektivringen des Kameraobjektivs verbindbaren Verstelleinrichtungen zur motorischen Verstellung der Zoom-, Focus- oder Iris-Einstellungen des Kameraobjektivs in Abhängigkeit von Sollwerten möglich, die von dem Steuerungssystem für Kameraobjektive abgegeben werden.

Vorzugsweise bestehen die Positionssensoren und/oder Verstelleinrichtungen aus an die Objektivringe des Kameraobjektivs schwenkbaren Antriebseinheiten.

Weitere Vorteile und Merkmale der Erfindung sollen anhand eines in den Figuren der Zeichnung dargestellten Ausführungsbeispieles näher erläutert werden. Es zeigen:
- Fig. 1: eine schematisch-perspektivische Darstellung des vorderen Gehäuseteils einer Laufbildkamera mit einer standardisierten Objektivaufnahme;
- Fig. 2: eine Draufsicht auf die standardisierte Objektivaufnahme gemäß Fig. 1;
- Fig. 3: eine schematisch-perspektivische Darstellung eines nicht erfindungsgemäßen Kameraobjektivs mit einer standardisierten oder nachträglich modifizierten Objektivbefestigung;
- Fig. 4: eine Explosionsdarstellung der Integration einer miniaturisierten Elektronik in eine nicht standardisierte Objektivbefestigung eines Kameraobjektivs und dessen Verbindung mit dem Kameraobjektiv;
- Fig. 5: eine schematische Darstellung eines Steuerungssystems für Kameraobjektive mit standardisierter oder modifizierter Objektivbefestigung und mehreren Positionserfassungs- und Antriebseinheiten und Handbedieneinheiten.

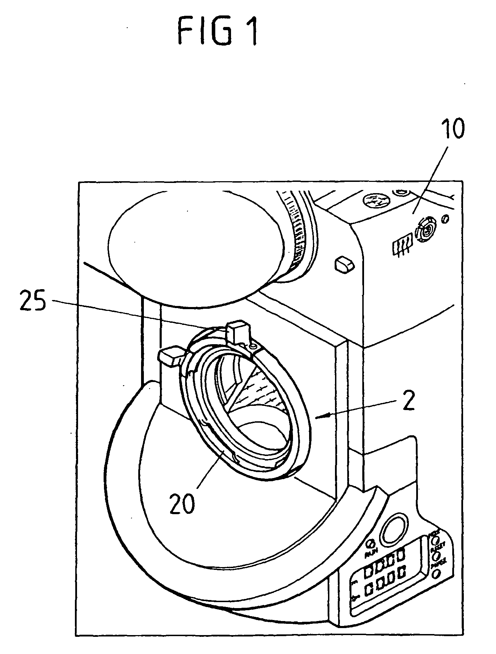

Die in Fig. 1 schematisch-perspektivisch dargestellte Frontseitenansicht einer Laufbildkamera 1 mit einem Kameragehäuse 10 zeigt eine an der Frontseite des Kameragehäuses 10 oberhalb einer Abdeckung für eine rotierende Spiegelblende angeordnete Objektivaufnahme 2 für ein Kameraobjektiv. Die Objektivaufnahme 2 ist zur Aufnahme standardisierter Objektivbefestigungen, sogenannter PL-Mounts, ausgebildet und bei fehlendem Kameraobjektiv mit einer die Öffnung in das Innere der Laufbildkamera 1 verschließenden Abdeckkappe verbunden.

Die Verbindung der Objektivbefestigung eines Kameraobjektivs mit der Objektivaufnahme 2 erfolgt über einen Bajonettverschluss mit einem Bajonettring 20, der mittels eines Hebels 25 betätigt wird. Wird der Hebel 25 entgegen dem Uhrzeigersinn verschwenkt, so wird der Bajonettverschluss zur Verbindung der Objektivaufnahme 2 mit einer Abdeckkappe oder mit einem Kameraobjektiv geöffnet, so dass die Abdeckkappe oder das Kameraobjektiv von der Laufbildkamera 1 abgenommen werden kann.

Zur Verbindung eines Kameraobjektivs mit der Objektivaufnahme 2 wird die Objektivbefestigung des Kameraobjektivs in die Öffnung der Objektivaufnahme 2 eingesetzt, wobei vier verteilt angeordnete Nuten und Stege 21 bis 24 des Bajonettrings 20 eine Sicherung des Kameraobjektivs über verteilt angeordnete Bajonettverbindungen ermöglicht. Zum Verriegeln und Festlegen des Kameraobjektivs an der Objektivaufnahme 2 der Laufbildkamera 1 wird der Handhebel 25 im Uhrzeigersinn verschwenkt, so dass der Bajonettring 20 dementsprechend im Uhrzeigersinn mitbewegt und die Verbindung zwischen Kameraobjektiv und Laufbildkamera 1 gesichert wird.

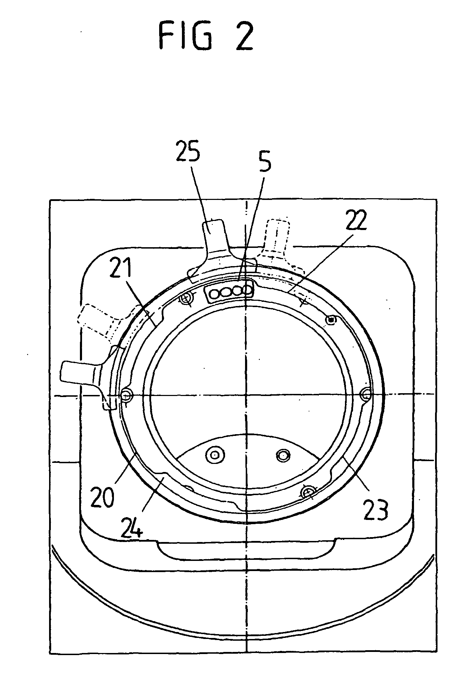

Die in Fig. 2 dargestellte Draufsicht auf die Objektivaufnahme 2 an der Frontseite des Kameragehäuses 10 zeigt die vier um jeweils 90° zueinander versetzt angeordneten Nuten und Stege 21 bis 24 des Bajonettrings 20 der Objektivaufnahme 2 sowie den von der Öffnungs- zur Schließstellung bzw. der Schließstellung zur Öffnungsstellung verschwenkten Hebel 25 des Objektivrings 20 zum Befestigen bzw. Lösen der Objektivbefestigung eines Kameraobjektivs.

In der Objektivaufnahme 2 ist als standardisierte elektrische Schnittstelle zu einer standardisierten Objektivbefestigung eines Kameraobjektivs mit integriertem Datenspeicher und Positionssensoren ein Kontaktbereich 5 mit in diesem Ausführungsbeispiel vier Kontakten vorgesehen, die mit entsprechenden Gegenkontakten an der standardisierten Objektivbefestigung kontaktiert werden. Die Kontakte des Kontaktbereichs 5 sind mit einer kamerainternen Steuer- und Regeleinrichtung bzw. mit einer am Kameragehäuse 10 angeordneten Schnittstelle zur Verbindung der Laufbildkamera 1 mit einem externen Steuerungssystem für Kameraobjektive verbunden.

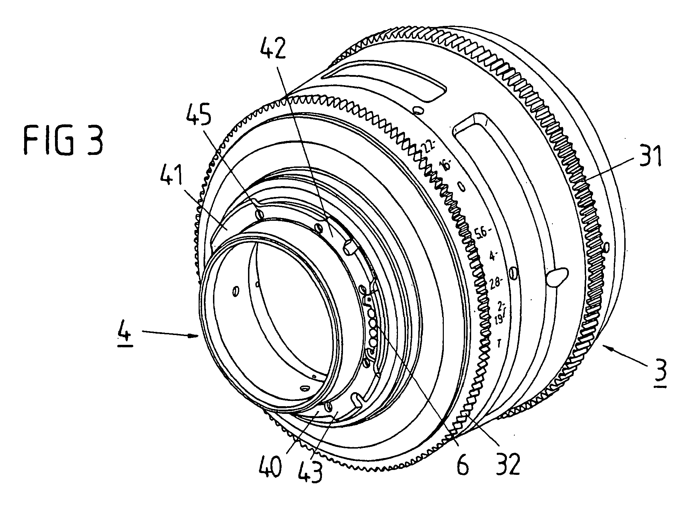

Fig. 3 zeigt in schematisch-perspektivischer Ansicht ein Kameraobjektiv 3 mit mehreren Objektivringen 31, 32 zur Zoom-, Iris- und/oder Focuseinstellung und einer standardisierten oder nachträglich modifizierten Objektivbefestigung 4, die mit einer standardisierten Objektivaufnahme einer Laufbildkamera gemäß den Fig. 1 und 2 zu verbinden ist und eine standardisierte elektrische Schnittstelle mit einem Kontaktbereich 6 mit vier Kontakten aufweist, die die vier Kontakte des Kontaktbereichs 5 der Objektivaufnahme 2 gemäß Fig. 2 bei montiertem Kameraobjektiv kontaktieren und damit eine Verbindung entweder zwischen der Vorrichtung zur Ermittlung des Ist-Zustandes der Objektivringpositionen eines standardisierten Kameraobjektivs oder der miniaturisierten Elektronik mit integriertem Datenspeicher einer entsprechend der Erfindung nachträglich modifizierten Objektivbefestigung mit dem Steuerungssystem für Kameraobjektive herstellen.

Bei nicht mit einem standardisierten PL-Mount ausgestatteten Kameraobjektiv 3 kann die vorhandene, nicht standardisierte Objektivbefestigung durch Lösen der Schraubverbindungen 45 vom Kameraobjektiv 3 gelöst und durch eine modifizierte Objektivbefestigung mit miniaturisierter Elektronik mit integriertem Datenspeicher und standardisierter elektrischer Schnittstelle ersetzt werden.

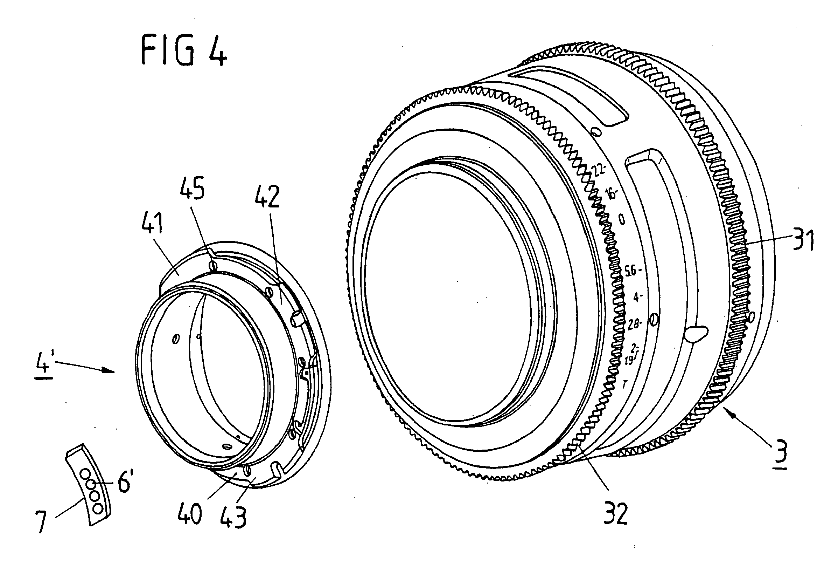

Die in Fig. 4 in einer Explosionsdarstellung gezeigte perspektivische Ansicht eines nicht mit einem standardisierten PL-Mount ausgestatteten Kameraobjektivs 3 zeigt dessen Verbindung mit einem modifizierten PL-Mount 4', in den eine miniaturisierte Elektronik 7 mit integriertem Datenspeicher und einer standardisierten elektrischen Schnittstelle mit einem vier Kontakte aufweisenden Kontaktbereich 6' eingesetzt wird. Der Datenspeicher der miniaturisierte Elektronik 7 enthält optikbezogene Daten des Kameraobjektivs 3 wie Objektivtyp, Seriennummer, Umrechnungstabellen und dergleichen, die über die Kontakte der standardisierten elektrischen Schnittstelle von dem in die Laufbildkamera integrierten oder externen Steuerungssystem für Kameraobjektive ausgelesen werden können.

Die miniaturisierte Elektronik 7 kann neben einer eigenen Stromversorgungseinrichtung einen Prozessor enthalten, der über die Datenschnittstelle zur Laufbildkamera mit einem entsprechenden Prozessor des Steuerungssystems für Kameraobjektive kommuniziert und ein- oder ausgelesene Daten verarbeitet und im Datenspeicher der miniaturisierten Elektronik 7 ablegt und aus deren Datenspeicher ausliest.

Der modifizierte PL-Mount 4' mit miniaturisierter Elektronik 7 mit integriertem Datenspeicher und einem Kontaktbereich 6' für eine standardisierte elektrische Schnittstelle kann in einfacher Weise für beliebige Kameraobjektive bereitgestellt werden und enthält einen Bajonettring 40 mit Bajonettstegen 41 bis 43 zur Verbindung mit der Objektivaufnahme einer Laufbildkamera. Der modifizierte PL-Mount 4' wird auf eine nicht standardisierte Objektivbefestigung aufgesteckt und mit dieser verbunden. Die miniaturisierte Elektronik 7 enthält wahlweise einen die optikbezogenen Daten des jeweiligen Kameraobjektivs speichernden integrierten Festwertspeicher (ROM) oder einen über eine entsprechende Programmiereinrichtung mit den optikbezogenen Daten des jeweiligen Kameraobjektivs programmierbaren Datenspeicher, so dass für unterschiedliche Kameraobjektive lediglich ein modifizierter PL-Mount 4', der mit der jeweiligen Objektivbefestigung eines Kameraobjektivs 7 verbunden wird, vorzuhalten ist.

Der modifizierte PL-Mount 4' besteht aus einem Zwischenflansch, wobei das mit der Objektivaufnahme der Laufbildkamera zu verbindende Kameraobjektiv 3 eine Objektivbefestigung aufweist, die nicht direkt, sondern über den Zwischenflansch an die Objektivaufnahme angeflanscht wird. In diesem Fall erfüllt der Zwischenflansch die Doppelfunktion eines mechanischen und elektronischen Verbindungsgliedes.

In einer weiteren Alternative kann ein mit einer mechanisch standardisierten Objektivbefestigung versehenes Kameraobjektiv zusätzlich mit einer Einrichtung zur Speicherung von Daten des Kameraobjektivs ausgestattet werden, die aus einer als Schaltkreisfolie ausgebildeten miniaturisierten Elektronik mit Datenspeicher und standardisierter elektrischer Schnittstelle besteht, die auf der Objektivbefestigung des Kameraobjektivs angebracht wird, wobei die an der Datenschnittstelle angeordneten Kontakte der miniaturisierten Elektronik auf die in der Objektivaufnahme der Laufbildkamera angeordneten Kontakte ausgerichtet sind.

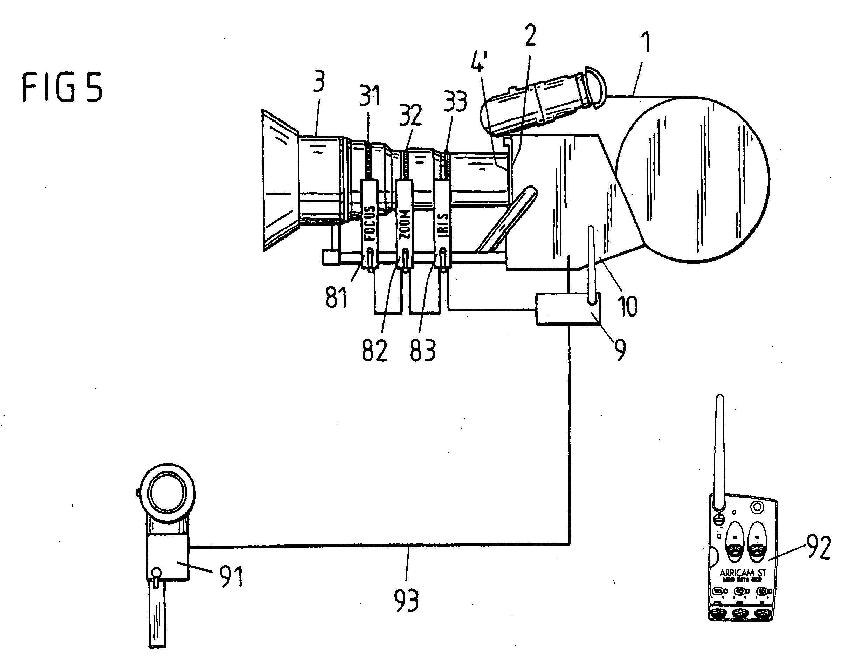

In Fig. 5 ist schematisch ein Steuerungssystem für ein über eine Objektivaufnahme 2 mit einer Laufbildkamera 1 verbundenes Kameraobjektiv 3 dargestellt, das drei Objektivringe 31, 32, 33 zur Zoom-, Focus- und Iris-Einstellung enthält. Das Steuerungssystem setzt sich aus einer Handbedieneinheit 91 zur Zoom-, Focus- und/oder Iris-Einstellung, einer Antriebseinheit 81 zur Focus-Einstellung, einer Antriebseinheit 82 zur Zoom-Einstellung, einer Antriebseinheit 83 zur Iris-Einstellung und einer kameraseitigen Objektiv-Steuereinheit 9 zusammen, die in die Laufbildkamera 1 integriert oder als externe Einrichtung mit einer kameraseitigen Schnittstelle verbunden ist. Die Handbedieneinheit 91 und die Antriebseinheiten 81, 82, 83 sind über einen seriellen Steuer- und Datenbus 93 miteinander verbunden.

Die Antriebseinheiten 81, 82, 83 übertragen über Ritzel jeweils ein Drehmoment auf die Zahnräder der entsprechenden Objektivringe 31, 32, 33 des Kameraobjektives 3 entsprechend aufgezeichneten oder an der Handbedieneinheit 91 eingestellten und über den seriellen Steuer- und Datenbus 93 übertragenen Sollwerten zur Zoom-, Focus- und Iris-Einstellung.

Die Handbedieneinheit 91 kann aus einer Haupteinheit, beispielsweise einer Zoom-Haupteinheit bestehen, an die Focus-/Iris-Module über einen Erweiterungsstecker angesteckt oder über Kabel angeschlossen werden können, und ist insbesondere als Handradeinheit mit jeweils einem Handrad für die Zoom-, Focus- und Iris-Einstellung ausgebildet. Das Handrad ist dabei ähnlich wie bei einer mechanischen Schärfenzieheinrichtung mit abnehmbaren Skalenscheiben und verschiebbaren, mechanisch justierbaren Endanschlägen ausgebildet. Sowohl die Zoom-Haupteinheit als auch die Focus-/Iris-Module weisen vorzugsweise elektronische Anzeigen zur Anzeige der Sollwerte für die Antriebseinheiten 81, 82, 83 auf.

Anstelle einer über den seriellen Steuer- und Datenbus 93 mit den Antriebseinheiten 81, 82, 83 und der kameraseitigen Objektiv-Steuereinheit 9 verbundenen Handbedieneinheit 91 kann ein Bedienelement 92 zur Zoom-, Focus- und Iris-Einstellung des Kameraobjektivs 3 sowie zur Einstellung von Kamerafunktionen über eine Funksende- und Empfangseinrichtung drahtlos mit der kameraseitigen Objektiv-Steuereinheit 9 verbundenen werden, die ebenfalls eine Funksende- und Empfangseinrichtung aufweist.

Das Kameraobjektiv 3 weist einen modifizierten PL-Mount 4' mit einer miniaturisierten Elektronik mit einem die Optik bezogenen Daten des Kameraobjektivs speichernden Datenspeicher auf und ist über den modifizierten PL-Mount 4' mit der Objektivaufnahme 2 der laufenden Kamera 1 verbunden. Die Objektivsteuerung 9 liest aus dem Datenspeicher der miniaturisierten Elektronik des modifizierten PL-Mounts 4' die optikbezogenen Daten des Kameraobjektivs 3 aus und empfängt zusätzlich von den an die Objektivringe 31, 32, 33 des Kameraobjektivs 3 angeschwenkten Positionsgebern oder Antriebseinheiten 81, 82, 83 Ist-Zustandssignale der Fokus-, Zoom- und Iris-Einstellungen. In Abhängigkeit von an der Handbedieneinheit 91 bzw. 92 eingestellten Sollwerten der Fokus-, Zoom- und Iris-Einstellung gibt die Objektiv-Steuereinheit 9 im Falle von an die Objektivringe 31, 32, 33 angeschwenkten Antriebseinheiten 81, 82, 83 Stellsignale zur Fokus-, Zoom- und Iris-Einstellung in Abhängigkeit von den aus dem Datenspeicher des modifizierten PL-Mounts 4' ausgelesenen optikbezogenen Daten des Kameraobjektivs 3 ab.

Da die Objektiv-Steuereinheit 9 die aus dem Datenspeicher des modifizierten PL-Mounts 4' ausgelesenen objektbezogenen Daten und damit die objektivspezifischen Parameter berücksichtigt, kann beispielsweise die Tiefenschärfe des Kameraobjektivs 3 exakt bestimmt werden, so dass Scharfeinstellungen innerhalb vorgegebener Grenzen vorgenommen und die ausnutzbare Tiefenschärfe ermittelt und ggf. optisch angezeigt werden können.

### Bezugszeichenliste

- 1: Laufbildkamera
- 2: Objektivaufnahme
- 3: Kameraobjektiv
- 4: Objektivbefestigung
- 4': modifizierter PL-Mount
- 5, 6: Kontaktbereich
- 6': standardisierte elektrische Schnittstelle
- 7: miniaturisierte Elektronik
- 9: Objektiv-Steuereinheit
- 10: Kameragehäuse
- 20: Bajonettring
- 21-24: Stege
- 25: Hebel
- 31-33: Objektivringe
- 40: Bajonettring
- 41-43: Bajonettstege
- 45: Schraubverbindung
- 81-83: Antriebseinheiten
- 91: Handbedieneinheit
- 92: Bedienelement
- 93: serieller Steuer- und Datenbus

## Patentansprüche

1. System bestehend aus
i) einem Kameraobjektiv (3) mit einer nicht standardisierten Objektivbefestigung (4), wobei das Kameraobjektiv (3) keinen integrierten Datenspeicher und keine standardisierte elektrische Schnittstelle zu einem Steuerungssystem aufweist;
ii) einer Laufbildkamera (1), die ein Kameragehäuse (10) mit einer Objektivaufnahme (2) und eine Einrichtung zur Erfassung von Daten des mit der Objektivaufnahme (2) verbundenen Kameraobjektivs (3) aufweist; und
iii) einem Zwischenflansch (4') zum Verbinden des Kameraobjektivs (3) mit einer Laufbildkamera (1);
iv) wobei der Zwischenflansch (4') eine Einrichtung (7) zur Speicherung von optikbezogenen Daten des Kameraobjektivs (3) aufweist,
v) wobei der Zwischenflansch (4') einerseits mit der Objektivbefestigung (4) des Kameraobjektivs (3) und andererseits mit der Objektivaufnahme (2) der Laufbildkamera (1) verbunden ist, und
vi) wobei der Zwischenflansch (4') einen Kontaktbereich (6') aufweist, der auf einen in der Objektivaufnahme (2) der Laufbildkamera (1) angeordneten Kontaktbereich (5) zum Auslesen der optikbezogenen Daten des Kameraobjektivs (3) durch ein in die Laufbildkamera (1) integriertes oder externes Steuerungssystem für Kameraobjektive ausgerichtet ist.

2. System nach Anspruch 1, **dadurch gekennzeichnet, dass** der Zwischenflansch (4') einen Bajonettring (40) mit Bajonettstegen (41 bis 43) zur Verbindung mit der Objektivaufnahme (2) der Laufbildkamera (1) aufweist.

3. System nach Anspruch 1 oder 2, **dadurch gekennzeichnet, dass** der Zwischenflansch (4') auf die Objektivbefestigung aufgesteckt und mit dieser verbunden wird.

4. System nach mindestens einem der voranstehenden Ansprüche, **dadurch gekennzeichnet, dass** die Einrichtung zur Speicherung der Daten des Kameraobjektivs (3) Teil einer miniaturisierten Elektronik (7) mit Datenspeicher und dem an der Datenschnittstelle angeordneten Kontaktbereich (6') ist

5. System nach Anspruch 4, **dadurch gekennzeichnet, dass** die miniaturisierte Elektronik (7) als Schaltkreisfolie ausgebildet ist, die auf dem Zwischenflansch (4') so angebracht wird, dass der Kontaktbereich (6') auf den in der Objektivaufnahme (2) der Laufbildkamera (1) angeordneten Kontaktbereich (5) ausgerichtet ist.

6. System nach Anspruch 4 oder 5, **dadurch gekennzeichnet, dass** die miniaturisierte Elektronik (7) eine Stromversorgungseinrichtung und/oder einen Spannungspuffer enthält.

7. System nach mindestens einem der voranstehenden Ansprüche 4 bis 6, **dadurch gekennzeichnet, dass** die miniaturisierte Elektronik (7) einen Prozessor zur Verarbeitung der Daten des Kameraobjektivs (3) sowie der Positionssignale und/oder der vom Steuersystem für Kameraobjektive abgegebenen Sollwerte enthält.

8. System nach mindestens einem der voranstehenden Ansprüche, **gekennzeichnet durch** mindestens einen mit dem Kameraobjektiv (3) verbindbaren Positionssensor zur Erfassung von Objektiveinstellungen wie Zoom, Focus oder Iris und Abgabe von Positionssignalen an ein Steuersystem für Kameraobjektive.

9. System nach Anspruch 8, **gekennzeichnet durch** mindestens eine mit dem Kameraobjektiv (3) verbindbare Verstelleinrichtung zum motorischen Verstellen von Zoom-, Focus- oder Iris-Einstellungen des Kameraobjektivs (3) in Abhängigkeit von Sollwerten, die von dem Steuersystem für Kameraobjektive abgegeben werden.

10. System nach Anspruch 8 oder 9, **dadurch gekennzeichnet, dass** der Positionssensor und/oder die Verstelleinrichtung aus an Objektivringen (31, 32, 33) des Kameraobjektivs (3) anschwenkbaren Antriebseinheiten (81, 82, 83) bestehen.

## Claims

1. A system, comprising
i) a camera lens (3) with a non-standardized lens mount (4), wherein the camera lens (3) includes no integrated data memory and no standardized electric interface to a control system;
ii) a film camera (1) which includes a camera housing (10) with a lens receptacle (2) and a means for acquiring data of the camera lens (3) connected with the lens receptacle (2); and
iii) an intermediate flange (4') for connecting the camera lens (3) with a film camera (1);
iv) wherein the intermediate flange (4') includes a means (7) for storing optics-related data of the camera lens (3),
v) wherein the intermediate flange (4') on the one hand is connected with the lens mount (4) of the camera lens (3) and on the other hand with the lens receptacle (2) of the film camera (1), and
vi) wherein the intermediate flange (4') has a contact region (6') which is aligned with a contact region (5) arranged in the lens receptacle (2) of the film camera (1) for reading out the optics-related data of the camera lens (3) by a control system for camera lenses disposed externally or integrated into the film camera (1).

2. The system according to claim 1, **characterized in that** the intermediate flange (4') includes a bayonet ring (40) with bayonet webs (41 to 43) for connection with the lens receptacle (2) of the film camera (1).

3. The system according to claim 1 or 2, **characterized in that** the intermediate flange (4') is put onto the lens mount and connected with the same.

4. The system according to at least one of the preceding claims, **characterized in that** the means for storing the data of the camera lens (3) is part of a miniaturized electronic system (7) with data memory and the contact region (6') arranged at the data interface.

5. The system according to claim 4, **characterized in that** the miniaturized electronic system (7) is formed as circuit foil which is mounted on the intermediate flange (4') such that the contact region (6') is aligned with the contact region (5) arranged in the lens receptacle (2) of the film camera (1).

6. The system according to claim 4 or 5, **characterized in that** the miniaturized electronic system (7) contains a power supply means and/or a voltage buffer.

7. The system according to at least one of the preceding claims 4 to 6, **characterized in that** the miniaturized electronic system (7) contains a processor for processing the data of the camera lens (3) as well as the position signals and/or the setpoints output by the control system for camera lenses.

8. The system according to at least one of the preceding claims, **characterized by** at least one position sensor connectable with the camera lens (3) for detecting lens settings such as zoom, focus or iris and for outputting position signals to a control system for camera lenses.

9. The system according to claim 8, **characterized by** at least one adjusting means connectable with the camera lens (3) for the powered adjustment of zoom, focus or iris settings of the camera lens (3) in dependence on setpoints which are output by the control system for camera lenses.

10. The system according to claim 8 or 9, **characterized in that** the position sensor and/or the adjusting means consist of drive units (81, 82, 83) pivotable at lens rings (31, 32, 33) of the camera lens (3).

## Revendications

1. Système constitué de
i) un objectif de caméra (3) avec une fixation d'objectif (4) non standardisée, ledit objectif de caméra (3) ne comprenant ni mémoire de données intégrée ni interface électrique standardisée vers un système de commande ;
ii) une caméra cinématographique (1), qui comprend un boîtier de caméra (10) avec un logement pour objectif (2) et un dispositif pour acquérir des données depuis l'objectif de caméra (3) relié au logement pour objectif (2) ; et
iii) une bride intermédiaire (4') pour relier l'objectif de caméra (3) à une caméra cinématographique (1) ;
iv) dans lequel la bride intermédiaire (4') comprend un dispositif (7) pour mémoriser des données spécifiques à l'optique de l'objectif de caméra (3),
v) dans lequel la bride intermédiaire (4') est reliée d'une part avec la fixation d'objectif (4) de l'objectif de caméra (3) et d'autre part avec le logement pour objectif (2) de la caméra cinématographique (1), et
vi) dans lequel la bride intermédiaire (4') comprend une zone de contact (6') qui est orientée vers une zone de contact (5) agencée dans le logement pour objectif (2) de la caméra cinématographique (1) pour la lecture des données spécifiques à l'optique de l'objectif de caméra (3) par un système de commande intégré dans la caméra cinématographique (1) ou externe, pour des objectifs de caméra.

2. Système selon la revendication 1, **caractérisé en ce que** la bride intermédiaire (4') comprend une bague à baïonnette (40) avec des tétons de baïonnette (41 à 43) pour la liaison avec le logement d'objectif (2) de la caméra cinématographique (1).

3. Système selon la revendication 1 ou 2, **caractérisé en ce que** la bride intermédiaire (4') est s'étend sur la fixation d'objectif ou est reliée à celle-ci.

4. Système selon l'une au moins des revendications précédentes, **caractérisé en ce que** le dispositif pour mémoriser les données de l'objectif de caméra (3) fait partie d'une unité électronique miniaturisée (7) avec mémoire de données et avec la zone de contact (6') agencée sur l'interface de données.

5. Système selon la revendication 4, **caractérisé en ce que** l'unité électronique miniaturisée (7) est réalisée sous forme de film portant des circuits, qui est rapporté sur la bride intermédiaire (4') de telle manière que la zone de contact (6') est orientée vers la zone de contact (5) agencée dans le logement pour objectif (2) de la caméra cinématographique (1).

6. Système selon la revendication 4 ou 5, **caractérisé en ce que** l'unité électronique miniaturisée (7) comprend un dispositif d'alimentation électrique et/ou un tampon de tension.

7. Système selon l'une au moins des revendications précédentes 4 à 6, **caractérisé en ce que** l'unité électronique miniaturisée (7) contient un processeur pour le traitement des données de l'objectif de caméra (3) ainsi que des signaux de position et/ou des valeurs de consigne délivré(e)s depuis le système de commande pour des objectifs de caméra.

8. Système selon l'une au moins des revendications précédentes, **caractérisé par** au moins un capteur de position, susceptible d'être relié à l'objectif de caméra (3), pour l'acquisition de réglages de l'objectif, comme le zoom, la focalisation ou l'iris, et la fourniture de signaux de position à un système de commande pour objectif de caméra.

9. Système selon la revendication 8, **caractérisé par** au moins un dispositif de réglage, susceptible d'être relié à l'objectif de caméra (3), pour la modification motorisée des réglages de zoom, de focalisation ou des réglages d'iris de l'objectif de caméra (3) en fonction de valeurs de consignes qui sont délivrées par le système de commande pour objectif de caméra.

10. Système selon la revendication 8 ou 9, **caractérisé en ce que** le capteur de position et/ou le dispositif de réglage sont constitués par des unités d'entraînement (81, 82, 83) montées en pivotement sur des bagues d'objectif (31, 32, 33) de l'objectif de caméra (3).
